Europäisches Patentamt

European Patent Office

Office européen des brevets

(11) Veröffentlichungsnummer: **0 476 417 A1**

# EUROPÄISCHE PATENTANMELDUNG

(21) Anmeldenummer: **91114798.1**

(22) Anmeldetag: **03.09.91**

(51) Int. Cl.5: **C08L 81/02**, C08K 5/32, C08K 9/04

(30) Priorität: **14.09.90 DE 4029168**

(43) Veröffentlichungstag der Anmeldung:
**25.03.92 Patentblatt 92/13**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Heinz, Hans-Detlef, Dr.**
**Breslauer Strasse 31**
**W-4150 Krefeld 11(DE)**
Erfinder: **Döring, Joachim, Dr., c/o Bayer**
**Japan Ltd.**
**108 Takanawa 4-chome**
**Minatoku, Tokyo 108(JP)**
Erfinder: **Rüsseler, Wolfgang, Dr.**
**Buschstrasse 165**
**W-4150 Krefeld(DE)**

(54) **Mischungen aus Polyarylensulfiden, Nitroarylketoverbindungen, elektronenreichen Aromaten, Glasfasern und gegebenenfalls weiteren Füllstoffen.**

(57) Die Erfindung betrifft Mischungen aus Polyarylensulfiden, Nitroarylketoverbindungen, elektronenreichen Aromaten, Glasfasern und gegebenenfalls weiteren Füll(zusatz)stoffen. Die Mischungen zeichnen sich durch gute mechanische Eigenschaften aus.

EP 0 476 417 A1

Die Erfindung betrifft Mischungen aus Polyarylensulfiden, Nitroarylketoverbindungen, elektronenreichen Aromaten, Glasfasern und gegebenenfalls weiteren Füll(zusatz)stoffen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere sind Randfaserdehnung und Schlagzähigkeit für die Praxis nicht ausreichend. Es hat sich daher als Vorteil erwiesen, PAS z.B. durch Abmischung mit anderen Thermoplasten in den genannten Eigenschaften zu verbessern.

Die Verbesserung der mechan. Eigenschaften von PAS gelingt auch mit Mischungen aus Maleinsäureanhydrid-gepfropften, hydrierten Dienkautschuken und Epoxiden (JP-A 63-118369). Die großen Mengen an verwendeten Maleinsäureanhydrid-gepfropften Polyolefinen mit niedriger Glastemperatur verbessern die Zähigkeit, jedoch läßt sich die Biegefestigkeit nicht wesentlich steigern.

Für bestimmte Anwendungsgebiete ist das Eigenschaftsprofil derartiger Abmischungen jedoch nicht immer ganz befriedigend.

Es wurde nun gefunden, daß Abmischungen von Polyphenylensulfid (PPS) mit Nitroarylaldehyden, elektronenreichen Aromaten, Glasfasern und gegebenenfalls weiteren Zusätzen sich durch ihre mechanischen Eigenschaften auszeichnen.

Gegenstand der Erfindung sind daher Mischungen aus

A) 89,6 bis 20 Gew.-% Polyarylensulfiden, vorzugsweise Polyphenylensulfid,

B) 0,2 bis 5 Gew.-% einer Nitroarylketoverbindung der Formel (I)

$$(O_2N)_m\text{-}Ar\text{-}(COR^1)_n \qquad (I),$$

worin

n und m für 1 oder 2, vorzugsweise für 1 stehen,

Ar für einen $n+m$-valenten aromatischen Rest mit 6-24 C-Atomen steht und

$R^1$ für Wasserstoff oder einen $C_{1-22}$-Alkyl- oder einen $C_{6-14}$-Aryl-rest, vorzugsweise für Wasserstoff steht,

C) 0,2 bis 5,0 Gew.-% elektronenreichen Aromaten,

D) 10 bis 79,9 Gew.-%, vorzugsweise

30 bis 60 Gew.-% Glasfasern,

die vorzugsweise mit Polyurethanfilmbildnern und Aminosilan- oder Epoxysilanhaftvermittlern, besonders bevorzugt Aminosilanhaftvermittlern geschlichtet sind und gegebenenfalls bis zu 300 Gew.-%, bezogen auf PAS, anderen mineralischen oder organischen Füll- und Verstärkungsstoffen und/oder anorganischen oder organischen Hilfsstoffen.

Beispiele für erfindungsgemäße Stoffe B) sind Nitroarylaldehyde und Ketone, z.B. 2-, 3- oder 4-Nitrobenzaldehyd, 2-, 3- oder 4-Nitroacetophenon, vorzugsweise 3-Nitrobenzaldehyd.

3-Nitrobenzaldehyd ist kommerziell erhältlich, z.B. bei Ems-Dottikon.

Als elektronenreiche Aromaten werden erfindungsgemäß eingesetzt Phenole, Bisphenole, Polyphenole, Kondensate aus Phenol mit Aldehyden, bevorzugt Formaldehyd, über 300°C siedende Aromaten wie vorzugsweise Xylol-Formaldehydkondensate oder Polyvinylphenol.

Erfindungsgemäß werden handelsübliche, bevorzugt mit Polyurethanfilmbildnern und Aminosilan- oder Epoxysilanhaftvermittlern geschlichtete Glasfasern eingesetzt. Sie haben einen Durchmesser von 1 bis so µm, vorzugsweise von 5 bis 13 µm. Es können Endlosglasfasern eingesetzt werden und/oder Herstellungsverfahren gewählt werden, bei denen die Länge der Fasern in der fertigen Abmischung 0,05 bis 10 mm, vorzugsweise 0,1 bis 2 mm, beträgt. Es können auch Endlosfasern (Rovings) eingesetzt werden in Verfahren zur Herstellung von endlosverstärktem Unidirektionalverbund.

Gegebenenfalls können auch - insbesondere teilweise - anstelle der Glasfasern handelsübliche Glaskugeln eingesetzt werden, z.B. Ballotini-Glaskugeln.

Als weitere, mineralische Füllstoffe oder Zusatzstoffe seien Glimmer, Talkum, Quarzmehl, Metalloxide und Sulfide, z.B. $TiO_2$, ZnO, ZnS, Graphit, Ruß, Fasern, z.B. aus Quarz oder Kohlenstoff, Carbonate wie z.B. $MgCO_3$, $CaCO_3$, oder Sulfat wie z.B. $CaSO_4$, $BaSO_4$, genannt.

Als weitere übliche Zusatzstoffe können Pigmente, Entformungsmittel, E-Wachse, Fließhilfsmittel, Nucleierungsmittel oder Stabilisatoren eingesetzt werden.

Die elektronenreichen, aromatischen Komponenten C sind bekannt und z.T. kommerziell erhältlich.

Beispiele für die Komponenten C sind in Karsten, Lackrohstofftabellen, 8. Auflage, Curt. R. Vincentz Verlag, Hannover, 1987 beschrieben.

Es können 0 bis 300 Gew`-%, bezogen auf PAS, Füll- und Zusatzstoffe eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Leiterplatten, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

Beispiele

Die Herstellung der erfindungsgemäßen Mischungen erfolgte auf einem Doppelwellenextruder ZSK 32 von Werner und Pfleiderer bei 320°C.

Das verwendete PPS wies eine Schmelzviskosität von 45 Pas (360°C), Schubspannung = 1000 s$^{-1}$ auf und wurde nach EP-A 171 021 hergestellt.

Als Glasfasern wurde die mit Polyurethanfilmbildner und Aminosilanhaftvermittler geschlichtete Schnittglasfaser Bayer CS 7916® zu 40 Gew.-% eingesetzt.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biegemodul und Schlagzähigkeit $a_n$ (reversed notched ISO 180) untersucht.

Vergleichsbeispiel

Gemischt wurden 60 Gew.-% PPS mit 40 Gew.-% CS 7916.

Beispiel 1

Gemischt wurden 50 Gew.-% PPS mit 40 Gew.-% CS 7916 1 Gew.-%, 3-Nitrobenzaldehyd und 1 % Vulkadur RB® (Novolak der Bayer AG).

Beispiel 2

Gemischt wurden 56 Gew.-% PPS mit 40 Gew.-% CS 7916, 2 Gew.-% 3-Nitrobenzaldehyd und 2 Gew.-% Vulkadur RB®.

Beispiel 3

Gemischt wurden 58 Gew.-% PPS mit 40 Gew.-% CS 7916, 1 Gew.-% 3-Nitrobenzaldehyd und 1 Gew.-% Kunstharz XF® (der Bayer AG).

Folgende Tabelle faßt die mechanischen Eigenschaften zusammen.

| Beispiel | Biegefestigkeit (MPa) | Randfaserdehnung (%) | Biegemodul (MPa) | Izod-Schlagzähigkeit (kJ/m$^2$) |
|---|---|---|---|---|
| Vergleich | 250 | 1,9 | 13,000 | 30 |
| 1 | 285 | 2,4 | 13,200 | 41 |
| 2 | 294 | 2,4 | 13,400 | 46 |
| 3 | 302 | 2,3 | 14,100 | 43 |

**Patentansprüche**

1. Mischungen aus
   A) 89,6 bis 20 Gew.-% Polyarylensulfiden
   B) 0,1 bis 35 Gew.-% einer Nitroarylketoververbindung der Formel (I)

   $(O_2N)_m$-Ar-$(COR^1)_n$     (I),

worin

n und m für 1 oder 2 stehen

   Ar      für einen (n+m)-valenten aromatischen Rest mit 6-24 C-Atomen steht und

   $R^1$      für Wasserstoff oder einen $C_{1-22}$-Alkyl- oder einen $C_{6-14}$-Aryl-rest, steht,

C) 0,2 bis 5,0 Gew.-% elektronenreichen Aromaten,

D) 10 bis 79,9 Gew.-% Glasfasern,

die gegebenenfalls mit Polyurethanfilmbildnern und Aminosilan- oder Epoxysilanhaftvermittlern geschlichtet sind und gegebenenfalls bis zu 300 Gew.-%, bezogen auf PAS, anderen mineralischen oder organischen Füll- und Verstärkungsstoffen und/oder anorganischen oder organischen Hilfsstoffen.

Europäisches
Patentamt

EUROPÄISCHER RECHERCHENBERICHT

Nummer der Anmeldung

| EINSCHLÄGIGE DOKUMENTE | | | EP 91114798.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
| A | DE - A - 3 819 479 (BAYER AG) * Gesamt * ---- | 1 | C 08 L 81/02 C 08 K 5/32 C 08 K 9/04 |
| | | | RECHERCHIERTE SACHGEBIETE (Int. Cl⁵) |
| | | | C 08 L 81/00 C 08 K |

Der vorliegende Recherchenbericht wurde für alle Patentansprüche erstellt.

| Recherchenort | Abschlußdatum der Recherche | Prüfer |
|---|---|---|
| WIEN | 19-12-1991 | TENGLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82